# EUROPEAN PATENT SPECIFICATION

(11) **EP 2 177 097 B1**
(45) Date of publication and mention of the grant of the patent: **18.04.2012**
(21) Application number: 09173337.8
(22) Date of filing: 16.10.2009
(51) Int. Cl.: A01B 1/16, A01C 5/02, A01C 5/04, A01G 9/10

(54) **Hole-forming device**
Lochbildungsvorrichtung
Dispositif de formation de trou

(30) Priority: 17.10.2008 GB 0819035
(43) Date of publication of application: 21.04.2010
(73) Proprietor: Bear, Jonathan, Colchester Essex CO7 6NW (GB)
(72) Inventor: Bear, Jonathan, Colchester Essex CO7 6NW (GB)
(74) Representative: Gillam, Francis Cyril

(56) References cited:
- FR-A- 2 741 774
- GB-A- 309 727
- GB-A- 522 286
- GB-A- 1 085 003
- US-A- 4 614 160

## Description

This invention relates to a hole-forming device, to assist the planting of a seedling or plant grown in a pot or other container or the planting of a bulb, rhizome, tuber or the like. Hereinafter, all such items to be planted will be referred to as "plants".

Very commonly, plants are grown in pots for example by a nursery and are sold while still contained in a relatively small pot, ready for "planting out" in a garden bed. In order to do this, a hole must be formed in that bed of a size sufficient to receive the root ball of the plant together with the soil around the root ball, once removed from the pot within which the plant has been grown from a cutting or seed. A similar problem arises with large bulbs, rhizomes, tubers or the like, where a hole must be formed in the ground to receive the item.

A suitable hole for a plant may be dug in the earth by means of a trowel or other similar implement, but these require the user to crouch, kneel or bend down, which can be difficult for the elderly or disabled. There have been proposals for tools intended to form a hole of a suitable size for the planting-out of growing plants, but these have various defects. One known form of tool for this purpose has a pair of generally semi-circular blades hinged together and each provided with a handle, such that the blades may be pressed into the ground, the tool is rotated to some extent and then, on squeezing the handles together, the soil between the blades is gripped thereby. On pulling the handles out of the soil, it is hoped that the soil between the blades also is removed, so leaving a hole ready for receiving the root ball of a plant. However, experience shows that often the soil is not removed with the blades and at least in part this is because it is difficult to squeeze the handles sufficiently firmly for the soil to be gripped while at the same time the handles must be pulled upwardly to remove the tool from the soil.

In an attempt to address the deficiencies of the tool described above, there have been many proposals for more complex tools for forming holes in the ground, ready for receiving a plant. Examples are to be found for instance in US-6662879, GB-891657 and US-4585072. A problem with these similar tools is that there is nothing to retain the soil in the tube which is pressed into the ground to define the hole. As such, on lifting the tube out of the soil, most often the soil within the tube slips out again and either no hole is formed or it is only partially formed. Most of these known tools have a tube with a cutting edge formed at the lower end thereof, in order to assist the pressing of the tube into the soil. It is known to produce a sharp edge by bevelling either the outer surface of the tube (for example GB-128853 (1919) and GB-1085003), the inner surface (for example US-4585072), or providing a pair of curved cutting teeth (JP-20030107). From GB-A-309 727 is known a hole-forming device in accordance with the preamble of claim 1, having an end wall of reduced diameter.

Other tools halve also been designed for this purpose but generally these have mechanical complexity which may lead to early failure, having regard to the conditions in which the tools are used and stored. Further, these tools are not particularly convenient to use and mostly require the user to kneel down or squat on the ground in order to operate the handles which, in use, are only slightly above ground level. Thus, it may not be possible for an elderly or disabled person to use these tools which otherwise could make planting easier for such a person.

It is a principal aim of the present invention to provide a planting device which is simple in both its construction and use, and which in a preferred embodiment may be used by a standing person without the need to kneel or squat on the ground.

According to this invention, there is provided a hole-forming device for use in soil, which device comprises a tubular head open at one end and having an elongate handle projecting away from the other end of the head, the head including a sleeve having an outer wall the greater part of which is of a substantially uniform shape and size and an inner wall the greater part of which is also of a substantially uniform shape and size, characterised in that the open one end of the sleeve is defined by a rounded end wall which interconnects the outer and inner walls, the internal cross-section of the sleeve in the region of the rounded end wall being smaller than the internal cross-section of the sleeve for the greater part of the internal wall.

It will be appreciated that the hole-forming device is arranged to create a hole in the ground by removing a portion of soil, but without the device having any moving parts for this process. This is achieved by pressing the sleeve of the head into the soil and having regard to the configuration of the inner wall at the open end of the sleeve, soil which is moved into the sleeve has to pass over the rounded region of reduced cross-section. Subsequently, but preferably following a rocking movement in a circular manner on the handle once the head has been pressed sufficiently far into the ground, on withdrawing the sleeve from the ground that soil pressed into the sleeve remains therewithin, so leaving a hole in the ground. The circular rocking movement of the handle serves to break away the soil within the sleeve from the ground therebelow, and also to give the hole a downwardly tapering form ready to receive a container-grown plant.

Internally within the sleeve, at the open end thereof, the rounded end wall defines a section of reduced cross-sectional shape and size. This has the effect of slightly compressing the soil received in the sleeve as the device is pushed into the soil but then serves to assist the retention of received soil within the sleeve. The combination of this reduced cross-section at the open end of the sleeve together with the friction of the soil against the inner wall of the sleeve ensures that most often the soil is retained within the sleeve when the device is lifted clear of the ground, so leaving a neat hole in the ground.

Preferably, the head is substantially cylindrical, having circular external and internal cross-sectional shapes. The rounded end wall may have a first part merging with the outer wall and a second part connecting the first part to the inner wall, the radius of the first part being smaller than the radius of the second part and the first and second parts blending smoothly into each other. In this way, a kind of rounded rib or bead is formed within the sleeve, at the open end thereof.

Advantageously, the first part of the rounded end wall merges smoothly with the outer wall such that the overall external dimension in a radial plane at the rounded end wall is no greater than the overall external dimension in a radial plane of the outer wall of the sleeve.

Typically, the handle comprises a round shaft secured at one end to the tubular head. The other end of the shaft may be provided with a manually-grippable portion such as a D-shaped handle similar to those used with garden forks and spades.

In a preferred embodiment, the head is releasably attached to said one end of the shaft, for example by means of a screw-threaded connection. That connection may use left-handed threads and in order to minimise the effects of abrasion by soil, it is preferred for the threads to be of an Acme or similar coarse profile. The threads associated with the handle shaft may be formed on a disc attached to the lower end of the shaft and which acts as a piston for the sleeve, to assist the expulsion of soil from the sleeve when the threads of the head have been released from those of the handle. For this purpose, the disc may have a first part which is a sliding fit within the sleeve and a second part of a smaller diameter and disposed on the handle side of the disc, with the threads formed on that second part.

The tubular head may have a boss at the other end thereof (i.e. the end opposed to the open end) and the threads are provided within that boss. The external surface of the boss may be profiled for example by means of external ribs to facilitate the manual gripping thereof when unscrewing the head from the handle or re-securing the head to the handle.

By way of example only, one specific embodiment of hole-forming device of this invention will now be described in detail, reference being made to the accompanying drawings in which:-
Figure 1 is a front view of the device, in a first setting;
Figure 2 is a further view of the device but in a second setting with the head released from the handle;
Figure 3 is an isometric view of the device in the setting of Figure 2;
Figure 4 is an isometric view on the disc at the lower end of the handle;
Figure 5 is an axial section through the head of the device;
Figure 6 shows the device about to be used for the planting of a seedling carried in a wheelbarrow;
Figures 7 and 8 show the insertion of the head of the device into the ground by pressing downwardly on the handle;
Figure 9 illustrates the rotational movement applied to the upper end of the handle in order that the head may form a hole in the ground;
Figure 10 shows the removal of the head from the ground so leaving a hole ready for receiving a seedling;
Figure 11 shows the insertion of the seedling in the hole;
Figure 12 shows the firming of the ground around the seedling; and
Figure 13 shows how the device may be used with one hand, to hold the head adjacent the upper end of the handle.

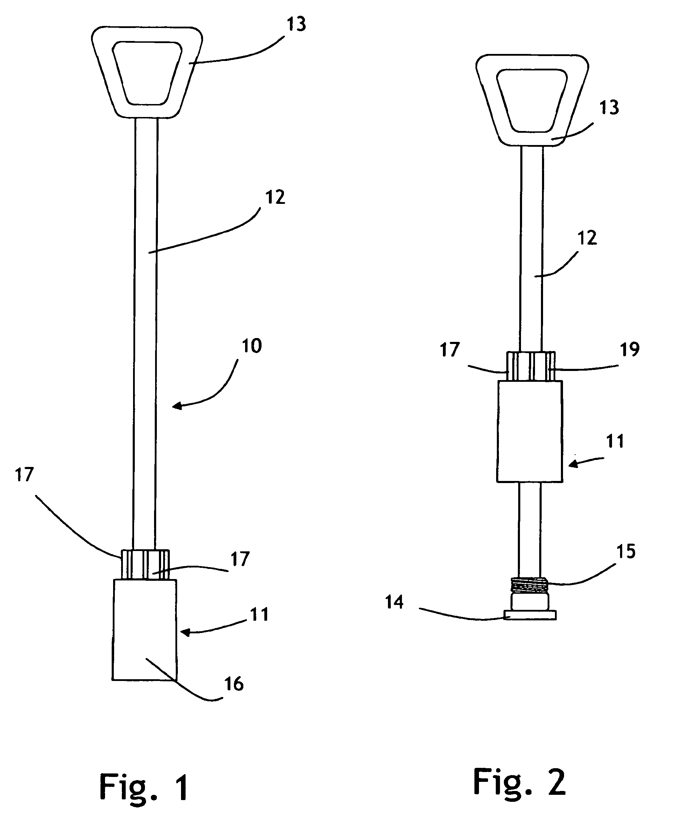

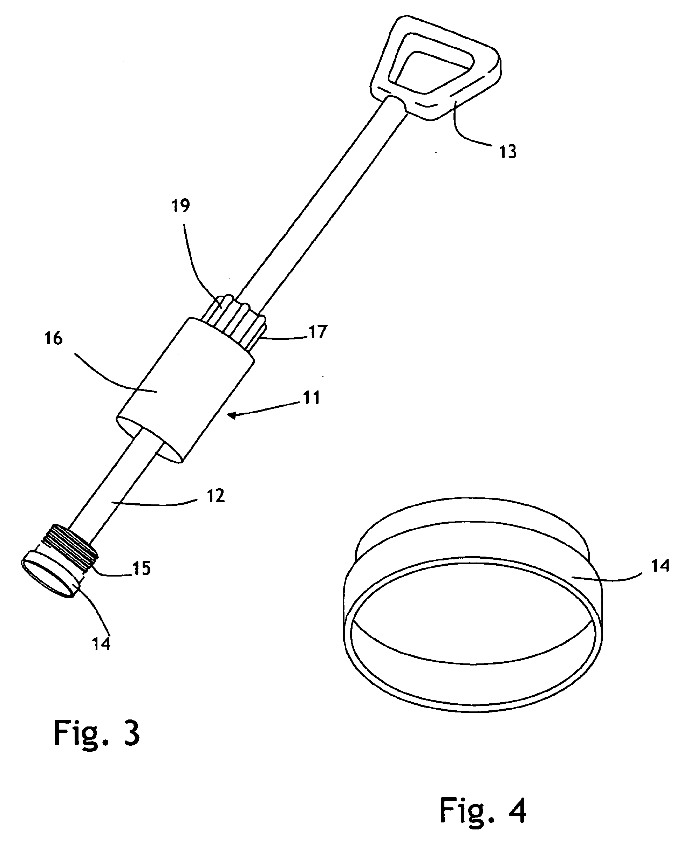

Referring initially to Figures 1 to 5, it can be seen that the hole-forming device comprises a handle portion 10 carrying at one end a hole-forming head 11. The handle portion has a shaft 12 provided at its upper end with a manually-graspable generally D-shaped handle 13, of a shape and size generally corresponding to a handle found for example on a spade or shovel. At its lower end, the shaft 12 carries a circular ejector disc 14, for a purpose to be described below. The upper portion of that disc has a reduced diameter part provided with an external left-handed Acme thread 15, as best seen in Figure 3.

The hole-forming head 11 comprises a sleeve 16 having at its upper end a bush 17 defining a bore 18 which is internally threaded so as to be cooperable with the Acme thread 15. The internal diameter of the threaded bore is such that the head is slidable along the length of the shaft 12 of the handle portion 10, once the thread of the bush 17 has been unscrewed from the thread 15 of the disc 14. By interengaging those threads, the sleeve 16 may be secured to the lower end of the handle. In order to assist the interengagement of the threads and the release thereof, the external surface of the bush 17 is provided with a plurality of spaced ribs 19.

The sleeve 16 extends away from the bush 17, that sleeve being cylindrical and having an outer wall 20 and an inner wall 21. The greater part of the length of the outer wall 20 is of uniform circular cross-sectional shape and typically may have a diameter in the range of 75mm to 100mm though for particular purposes, diameters outside this range may be chosen. The greater part of the length of the inner wall 21 also is of essentially uniform circular cross-sectional shape and typically may have a diameter in the range of 65mm to 90mm, so giving a sleeve wall thickness of about 5mm. Depending upon the material from which the sleeve is made, the wall thickness of the sleeve could lie in the range of 3mm to 10mm. In a practical embodiment, the inner wall may taper slightly from the open end to the bush 17; such a taper may be about 1 mm in diameter, over the length of the sleeve. In this case, the disc 14 may be a close sliding fit within the inner wall adjacent the bush 17 but will be a looser fit when adjacent the open end of the sleeve.

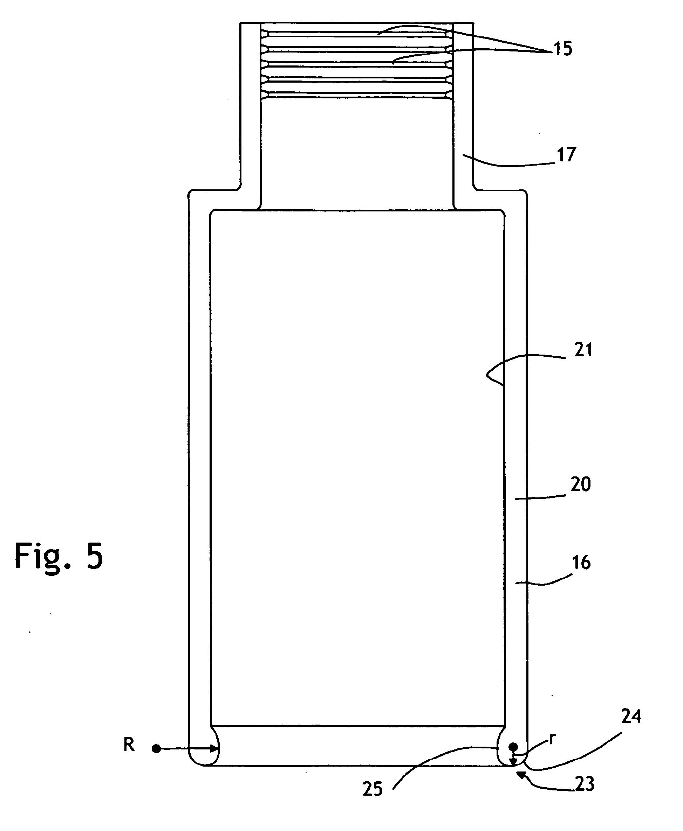

At the lower open end of the sleeve 16, there is formed an end wall 23 having a curved profile as best seen in Figure 5. That end wall has a first part 24 which blends smoothly with the outer wall 20 and has a substantially constant radius r a little smaller than the wall thickness, such that the diameter of the sleeve within the first part is smaller than for the greater part of the inner wall 21. The first part 24 merges with a second part 25 which conjoins the inner wall 21, that second part having a significantly greater radius R than the radius r of the first part. This profile is illustrated in and can be best appreciated from a consideration of Figure 5.

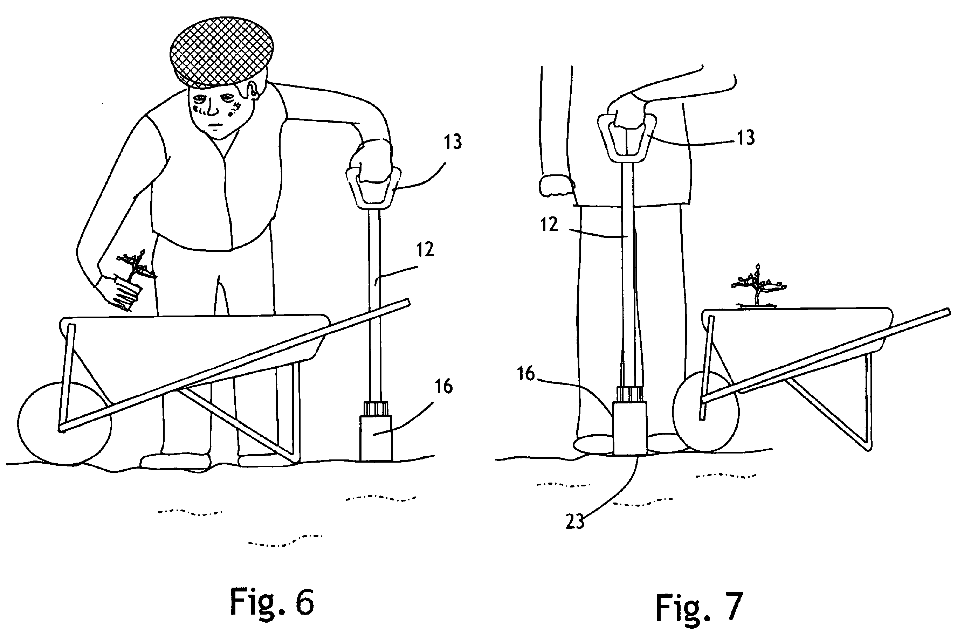

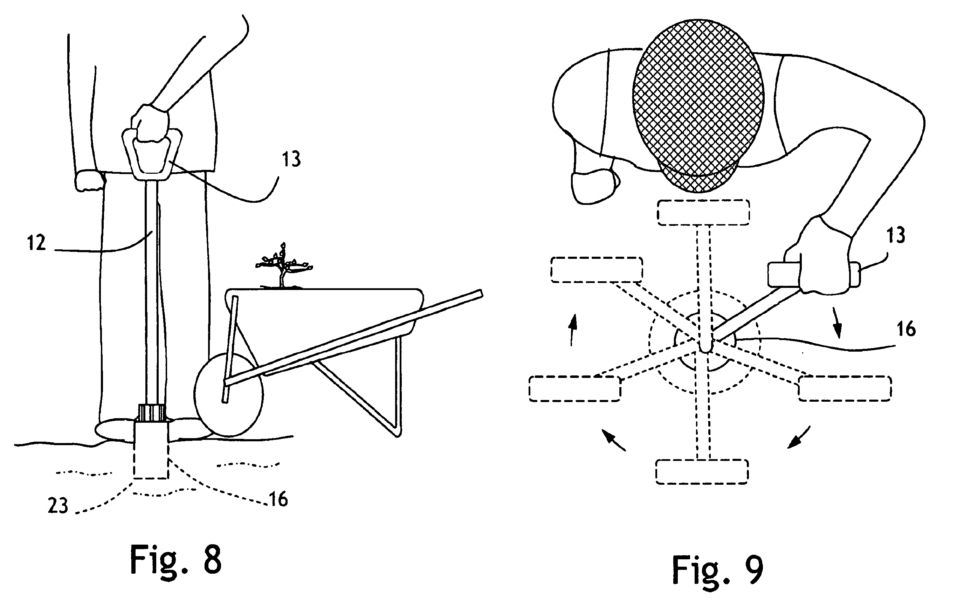

The hole-forming device is set so as to be ready for use by threading the sleeve 16 on to the threads 15 formed on the disc 14, as shown in Figure 1; in this setting, the disc 14 is adjacent the bush 17. A seedling or other small plant is taken to the site where it is to be planted along with the device (Figure 6) and the end wall 23 of the sleeve 16 is then pressed into the soil at the desired location (Figures 7 and 8), by applying a downward force on the handle 13. In order to assist the driving of the sleeve into the soil, the handle 13 may be moved laterally through small extents while pressure is maintained thereon. As the soil is pushed into the sleeve, it is compressed in the radially inward direction with respect to the axis of the sleeve by virtue of the reduced diameter of the end wall 23 but the natural resilience of the soil allows it to expand again on passing that end wall and so fill the chamber defined by the inner wall 21 of the sleeve.

Once the sleeve 16 has been pushed into the soil sufficiently far, for example so that the bush 17 is more or less at the level of the ground surface, the handle 13 is rocked or moved with a generally circular motion in a horizontal plane (Figure 9). This has the combined effect of making a downwardly tapering hole in the ground and also breaking the soil within the sleeve away from the main mass of soil at the level of the open lower end of the sleeve. As shown in Figure 9, it is envisaged that most people will rotate the handle 13 in a clockwise direction; in order to reduce the likelihood of the sleeve 16 unthreading from the disc 14 on account of the friction between the sleeve and the soil, the interengaging threads are of a left-handed form, as mentioned above.

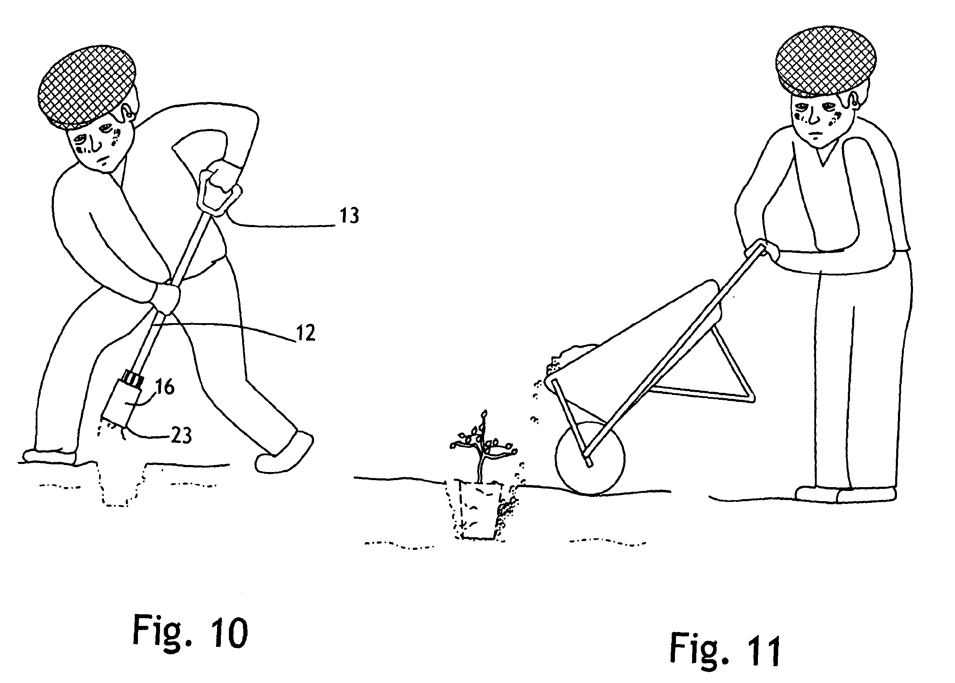

Once the hole has been formed as described, the sleeve is gently lifted out of the soil, using the shaft 12 and handle 13 (Figure 10). Having regard to the reduced diameter at the open end of the sleeve, defined by the end wall 23, as well as the friction between that soil and the inner wall 21 of the sleeve, the soil lifts out with the sleeve so leaving a reasonably clean hole in the soil, ready for receiving a plant. A seedling or other plant may be dropped into the hole (Figure 11) whereafter the sleeve 16 is turned in the appropriate direction relative to the handle by grasping the bush 17 and handle 13. Unthreading the sleeve from the disc 14 causes the disc to move towards the open end of the sleeve so ejecting the soil from within the sleeve. That soil may be deposited around the plant in the hole or within some other container such as a wheelbarrow 27. Either way, sufficient soil should be deposited around the plant so as to hold the plant within the tapering hole.

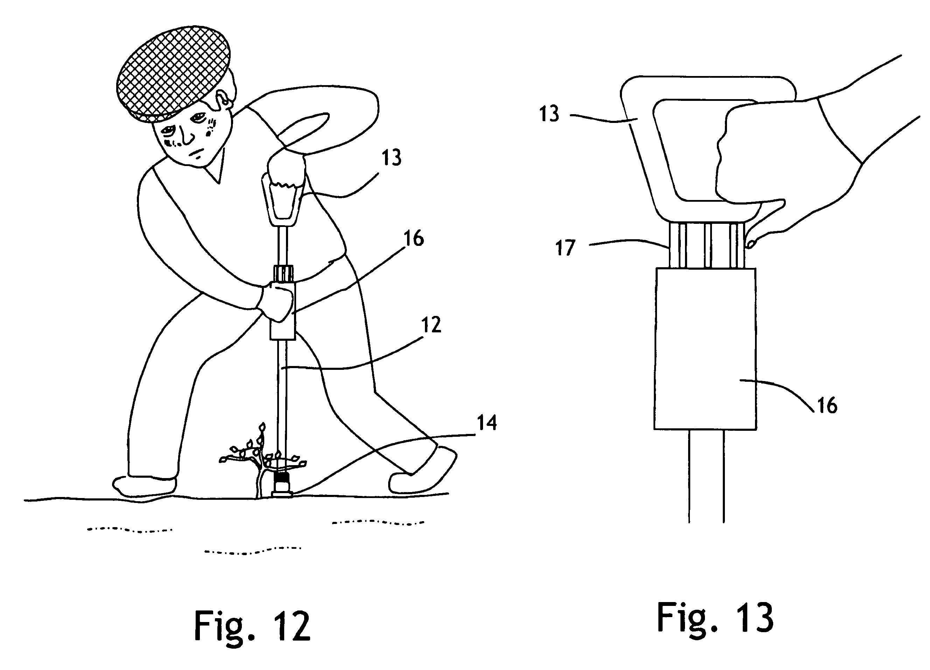

Finally, the sleeve 16 is held partway along the shaft 12 and using the handle 13, the disc 14 is used firmly to tamp the soil around the plant (Figure 12), to complete the planting thereof. As an alternative to using two hands as shown in Figure 12, the sleeve may be held closely adjacent the handle 13 by a thumb or finger of the hand grasping the handle as shown in Figure 13, such that the tamping operation may be completed using only one hand.

As illustrated in Figures 6 to 11, the shaft 12 of the handle portion may have a length suitable for the intended use. If the device is to be used standing up, the shaft may be relatively long, but if the device is to be used by a person kneeling or squatting, in a manner similar to using a trowel, then the shaft may be relatively short.

Though in the above-described embodiment the sleeve is of circular cross-sectional shape, it would be possible to provide a sleeve of some other shape, such as square. In this case, in order to allow the threaded coupling and de-coupling of the head from the handle, the disc 14 may be formed in two parts rotatably connected together, with the threaded upper part secured to the shaft of the handle. The lower part is slidably received in the sleeve and is rotatable relative to the upper part.

## Claims

1. A hole-forming device for use in soil, which device comprises a tubular head (11) open at one end and having an elongate handle (10) projecting away from the other end of the head, the head including a sleeve (16) having an outer wall (20) the greater part of which is of a substantially uniform shape and size and an inner wall (21) the greater part of which is also of a substantially uniform shape and size, **characterised in that** the open one end of the sleeve (16) is defined by a rounded end wall (23) which interconnects the outer and inner walls (20, 21), the internal cross-section of the sleeve (16) in the region of the rounded end wall (23) being smaller than the internal cross-section of the sleeve for the greater part of the internal wall (21).

2. A hole-forming device as claimed in claim 1, wherein the head (11) is substantially cylindrical, having circular external and internal cross-sectional shapes.

3. A hole-forming device as claimed in claim 2, wherein the rounded end wall (23) has: a first part (24) merging with the outer wall (20) and of a first radius; and a second part (25) connecting the first part (24) to the inner wall (21) and of a second radius greater than the first radius.

4. A hole-forming device as claimed in claim 3, wherein the first and second parts (24,25) of the rounded end wall (23) blend smoothly into each other.

5. A hole-forming device as claimed in claim 4, wherein the first part (24) of the rounded end wall (23) merges smoothly with the outer wall (20).

6. A hole-forming device as claimed in any of the preceding claim, wherein the overall external dimension in a radial plane at the rounded end wall (23) is no greater than the overall external dimension in a radial plane of the outer wall (20) of the sleeve (16).

7. A hole-forming device as claimed in any of the preceding claims, wherein the handle (10) is secured at one end to the tubular head (11) and is provided at its other end with a manually-grippable portion (13).

8. A hole-forming device as claimed in claim 7, wherein the head (11) is releasably attached to said one end of the elongate handle (10).

9. A hole-forming device as claimed in claim 8, wherein the head (11) is releasably attached to said one end of the elongate handle (10) by means of a screw-threaded connection (15).

10. A hole-forming device as claimed in claim 9, wherein the threads of the screw-threaded connection (15) are left-handed.

11. A hole-forming device as claimed in claim 9 or claim 10, wherein said one end of the elongate handle (10) supports a disc (14) and the threads (15) are provided on an external surface of the disc.

12. A hole-forming device as claimed in any of claims 9 to 11, wherein the tubular head (11) has a boss (17) at the other end thereof and the threads are provided within that boss at the other end.

13. A hole-forming device as claimed in claim 12, wherein the external surface of the boss (17) is profiled (19) to facilitate the manual gripping thereof.

14. A hole-forming device as claimed in any of claims 11 to 13, wherein the disc (14) has an external surface of a greater diameter than the threaded part thereof and which external surface is a sliding fit within the inner wall (21) of the sleeve (16).

15. A hole-forming device as claimed in any of claims 11 to 14, wherein the end face of the disc (14) remote from the handle (10) forms a tamping surface for the device, when the head (11) is released from the disc (14) and is slid along the handle (10) away from the one end thereof.

## Patentansprüche

1. Lochbildungsvorrichtung zum Einsatz im Erdboden, mit einem an einem ersten Ende offenen rohrförmigen Kopf (11) und einem lang gestreckten Griff (10), der sich von dem anderen Ende des Kopfes weg erstreckt, wobei der Kopf eine Hülse (16) mit einer äußeren Wand (20) hat, deren Großteil eine im Wesentlichen gleichmäßige Form und Größe hat, und mit einer inneren Wand (21), deren Großteil ebenfalls eine im Wesentlichen gleichmäßige Form und Größe hat, **dadurch gekennzeichnet, dass** das offene erste Ende der Hülse (16) mittels einer abgerundeten Stirnseite (23) gebildet ist, die die äußere und innere Wand (20,21) miteinander verbindet, wobei der Innenquerschnitt der Hülse (16) im Bereich der abgerundeten Stirnseite (23) kleiner ist als der Innenquerschnitt der Hülse für den Großteil der Innenwand (21).

2. Lochbildungsvorrichtung nach Anspruch 1, **dadurch gekennzeichnet, dass** der Kopf (11) im Wesentlichen zylindrisch mit kreisförmigen äußeren und inneren Querschnittsformen ist.

3. Lochbildungsvorrichtung nach Anspruch 2, **dadurch gekennzeichnet, dass** die abgerundete Stirnseite (23) einen ersten Teil (24), der in die äußere Wand (20) übergeht und einen ersten Radius hat, und einen zweiten Teil (25) aufweist, der den ersten Teil (24) mit der inneren Wand (21) verbindet und der einen zweiten Radius hat, der größer als der erste Radius ist.

4. Lochbildungsvorrichtung nach Anspruch 3, **dadurch gekennzeichnet, dass** der erste und zweite Teil (24, 25) der abgerundeten Stirnseite (23) nahtlos in einander übergehen.

5. Lochbildungsvorrichtung nach Anspruch 4, **dadurch gekennzeichnet, dass** der erste Teil (24) der abgerundeten Stirnseite (23) nahtlos in die äußere Wand (20) übergeht.

6. Lochbildungsvorrichtung nach einem der vorhergehenden Ansprüche, **dadurch gekennzeichnet, dass** die Gesamtaußenabmessung in einer radialen Ebene an der abgerundeten Stirnseite (23) nicht größer als die Gesamtaußenabmessung in einer radialen Ebene der äußeren Wand (20) der Hülse (16) ist.

7. Lochbildungsvorrichtung nach einem der vorhergehenden Ansprüche, **dadurch gekennzeichnet, dass** der Griff (10) an seinem ersten Ende an dem rohrförmigen Kopf (11) befestigt ist und an seinem anderen Ende ein mit der Hand greifbarer Bereich (13) vorgesehen ist.

8. Lochbildungsvorrichtung nach Anspruch 7, **dadurch gekennzeichnet, dass** der Kopf (11) lösbar an dem ersten Ende des lang gestreckten Griffes (10) angeordnet ist.

9. Lochbildungsvorrichtung nach Anspruch 8, **dadurch gekennzeichnet, dass** der Kopf (11) mittels einer Schraubgewindeverbindung (15) lösbar an dem ersten Ende des lang gestreckten Griffes (10) angeordnet ist.

10. Lochbildungsvorrichtung nach Anspruch 9, **dadurch gekennzeichnet, dass** die Gewinde der Schraubgewindeverbindung (15) linksgängig sind.

11. Lochbildungsvorrichtung nach Anspruch 9 oder 10, **dadurch gekennzeichnet, dass** das erste Ende des lang gestreckten Griffes (10) eine Scheibe (14) trägt und die Gewinde (15) an einer äußeren Oberfläche der Scheibe vorgesehen sind.

12. Lochbildungsvorrichtung nach einem der Ansprüche 9 bis 11, **dadurch gekennzeichnet, dass** der rohrförmige Kopf (11) an dessen anderen Ende einen Ansatz (17) hat und die Gewinde innerhalb dieses Ansatzes an dem anderen Ende vorgesehen sind.

13. Lochbildungsvorrichtung nach Anspruch 12, **dadurch gekennzeichnet, dass** die äußere Oberfläche des Ansatzes (17) profiliert ist, um ein Ergreifen dieser per Hand zu ermöglichen.

14. Lochbildungsvorrichtung nach einem der Ansprüche 11 bis 13, **dadurch gekennzeichnet, dass** eine äußere Oberfläche der Scheibe (14) einen größeren Durchmesser als deren Gewindeteil hat, wobei diese äußere Oberfläche eine Gleitpassung mit der inneren Wand (21) der Hülse (16) hat.

15. Lochbildungsvorrichtung nach einem der Ansprüche 11 bis 14, **dadurch gekennzeichnet, dass** eine von dem Griff (10) abgewandte Stirnfläche der Scheibe (14) eine Stampfoberfläche für die Vorrichtung bildet, wenn der Kopf (11) von der Scheibe (14) gelöst ist und entlang des Griffes (10) von dessen ersten Ende weg geschoben ist.

## Revendications

1. Dispositif de formation de trou destiné à être utilisé dans la terre, lequel dispositif comprend une tête tubulaire (11) ouverte à une extrémité et ayant un manche allongé (10) faisant saillie de l'autre extrémité de la tête, ladite tête comportant un manchon (16) qui possède une paroi externe (20) dont la plus grande partie est de forme et de taille sensiblement uniformes et une paroi interne (21) dont la plus grande partie est également de forme et de taille sensiblement uniformes, **caractérisé en ce que** l'extrémité ouverte du manchon (16) est définie par une paroi terminale arrondie (23) qui relie entre elles les parois externe et interne (20, 21), la section interne du manchon (16) dans la zone de ladite paroi terminale arrondie (23) étant plus petite que la section interne du manchon pour la plus grande partie de la paroi interne (21).

2. Dispositif de formation de trou selon la revendication 1, dans lequel la tête (11) est de forme sensiblement cylindrique, ayant des sections internes et internes de forme circulaire.

3. Dispositif de formation de trou selon la revendication 2, dans lequel la paroi terminale arrondie (23) possède : une première partie (24) se joignant à la paroi externe (20) et ayant un premier rayon ; et une deuxième partie (25) reliant la première partie (24) à la paroi interne (21) et ayant un deuxième rayon plus grand que le premier rayon.

4. Dispositif de formation de trou selon la revendication 3, dans lequel les première et deuxième parties (24, 25) de la paroi terminale arrondie (23) fusionnent l'une avec l'autre de façon régulière.

5. Dispositif de formation de trou selon la revendication 4, dans lequel la première partie (24) de la paroi terminale arrondie (23) fusionne de façon régulière avec la paroi externe (20).

6. Dispositif de formation de trou selon l'une des revendications précédentes, dans lequel la dimension extérieure totale dans un plan radial au niveau de la paroi terminale arrondie (23) n'est pas plus grande que la dimension extérieure totale dans un plan radial de la paroi externe (20) du manchon (16).

7. Dispositif de formation de trou selon l'une des revendications précédentes, dans lequel le manche (10) est fixé à une première extrémité à la tête tubulaire (11) et est muni à son autre extrémité d'une partie saisissable manuellement (13).

8. Un dispositif de formation de trou selon la revendication 7, dans lequel la tête (11) est fixée de manière amovible à ladite première extrémité du manche allongé (10).

9. Dispositif de formation de trou selon la revendication 8, dans lequel la tête (11) est fixée de manière amovible à ladite première extrémité du manche allongé (10) au moyen d'un raccordement fileté (15).

10. Dispositif de formation de trou selon la revendication 9, dans lequel le filetage du raccordement fileté (15) est un filetage à gauche.

11. Dispositif de formation de trou selon la revendication 9 ou la revendication 10, dans lequel ladite première extrémité du manche allongé (10) supporte un disque (14) et le filetage (15) est réalisé sur une surface externe dudit disque.

12. Dispositif de formation de trou selon l'une des revendications 9 à 11, dans lequel la tête tubulaire (11) possède un bossage à son autre extrémité et le filetage est réalisé à l'intérieur dudit bossage à l'autre extrémité.

13. Dispositif de formation de trou selon la revendication 12, dans lequel la surface externe du bossage (17) est profilée (19) pour faciliter la préhension manuelle de celui-ci.

14. Dispositif de formation de trou selon l'une des revendications 11 à 13, dans lequel le disque (14) possède une surface externe de diamètre supérieur à la partie filetée de celui-ci et laquelle surface externe est ajustée coulissante à l'intérieur de la paroi interne (21) du manchon (16)

15. Dispositif de formation de trou selon l'une des revendications 11 à 14, dans lequel la face terminale du disque (14) à l'opposé du manche (10) forme une surface de damage pour le dispositif, lorsque la tête (11) est désengagée du disque (14) et est coulissé le long du manche (10) en s'écartant de son extrémité.
